# EUROPÄISCHE PATENTSCHRIFT

(11) **EP 0 947 548 B1**
(45) Veröffentlichungstag und Bekanntmachung des Hinweises auf die Patenterteilung: **27.08.2003**
(21) Anmeldenummer: 99105651.6
(22) Anmeldetag: 19.03.1999
(51) Int. Cl.: C08K 11/00, C08L 21/00

(54) **Trimethylolpropan-Destillationsrückstände enthaltende Kautschukmischungen**
Rubber compositions containing residues from trimethylolpropane distillation
Compositions de caoutchouc contenant des résidus de distillation de triméthylolpropane

(30) Priorität: 01.04.1998 DE 19814655
(43) Veröffentlichungstag der Anmeldung: 06.10.1999
(73) Patentinhaber: BAYER AG, 51368 Leverkusen (DE)
(72) Erfinder: Scholl, Thomas Dr., 51469 Bergisch Gladbach (DE); Weidenhaupt, Herman-Josef Dr., 50259 Pulheim (DE); Noack, Achim, 42799 Leichlingen (DE); Steger, Lothar Dr., 81545 München (DE)

(56) Entgegenhaltungen:
- EP-A- 0 761 734
- DE-B- 1 077 865
- US-A- 3 923 719
- DATABASE WPI Section Ch, Week 8118, Derwent Publications Ltd., London, GB; Class A12, AN 81-32067D, XP002108193 & SU 757 561 A (KIROV POLY) 23 August 1980

## Beschreibung

Die vorliegende Erfindung betrifft Kautschukmischungen bestehend aus mindestens einem Kautschuk und einem bestimmten Anteil an einem Destillationsrückstand aus der technischen Trimethylolpropanherstellung sowie die Verwendung der Kautschukmischungen zur Herstellung von Vulkanisaten, insbesondere zur Herstellung von hochverstärkten, abriebbeständigen Formkörpern, besonders bevorzugt zur Herstellung von Reifen, die einen niedrigen Rollwiderstand und einen hohen Abriebwiderstand aufweisen.

Zur Herstellung von Reifen mit verringertem Rollwiderstand sind eine Reihe von Lösungsvorschlägen ausgearbeitet worden. In DE-A 2 255 577 und 4 435 311, EP-A 670 347 sowie US 4,709,065 sind bestimmte polysulfidische Silane als Verstärkungsadditive für kieselsäurehaltige Kautschukvulkanisate beschrieben worden. Nachteilig bei der Verwendung der dort beschriebenen polysulfidischen Silane als Verstärkungsadditive für kieselsäurehaltige Kautschukvulkanisate ist jedoch, daß zur Erreichung einer akzeptablen Verarbeitbarkeit relativ große Mengen der teuren polysulfidischen Silane erforderlich sind.

Zur Verbesserung der Verarbeitbarkeit von kieselsäurehaltigen Kautschukmischungen wurden weitere Zusatzstoffe vorgeschlagen, wie Fettsäureester, Fettsäuresalze oder Mineralöle. Die genannten Zusatzstoffe besitzen jedoch den Nachteil, daß sie die Fließfähigkeit erhöhen, gleichzeitig aber die Spannungswerte bei größerer Dehnung (z.B. 100 bis 300 %) vermindern, so daß die verstärkende Wirkung des Füllstoffs Einbuße erleidet.

Darüber hinaus war es bekannt, Polyalkohole und Polyglykole Kautschukmischungen zuzugeben, um die Verarbeitbarkeit zu verbessern (s. EP-A 761 734 und EP-A 738 755). Die Polyalkohole und Polyglykole sind jedoch zum Vergleich zu den erfindungsgemäßen Destillationsrückständen der technischen Trimethylolpropanherstellung teuer und im Hinblick auf die Verbesserung der Fließfähigkeit und der Anvulkanisationszeit nicht ausreichend.

Aufgabe der vorliegenden Erfindung war daher preiswertere Zusatzstoffe zu finden, die die Fließfähigkeit von Kautschukmischungen stark erhöhen und die Anvulkanisationszeit verlängern, ohne daß sie die oben geschilderten Nachteile der bislang verwendeten Zusatzstoffe aufweisen.

Gegenstand der vorliegenden Erfindung sind daher Kautschukmischungen, bestehend aus mindestens einem Kautschuk und 0,1 bis 15 Gew.-Teilen, bezogen auf 100 Gew.-Teile der Gesamtmenge an eingesetzten Kautschuken, eines Destillationsrückstandes aus der technischen Trimethylolpropanherstellung, gemäß der Trimethylolpropan durch Aldolkondensation und Reduktion von n-Butylaldehyd mit Fonmaldehyd in Gegenwart von Katalysatoren hergestellt wird, wobei der Destillationsrückstand eine Viskosität von 0,5 bis 20 Pa.sec bei 100 °C aufweist.

Bevorzugt wird den erfindungsgemäßen Kautschukmischungen eine Menge von 0,3 bis 10 Gew.-Teilen, besonders bevorzugt 0,5 bis 5 Gew.-Teilen, bezogen auf 100 Gew.-Teile an der Gesamtmenge an eingesetzten Kautschuken, eines Trimethylolpropan-Destillationsrückstands zugegeben.

Die Viskosität des Destillationsrückstandes aus der technischen Trimethylolpropanherstellung beträgt bevorzugt 0,5 bis 10 Pa.sec bei 100°C.

Trimethylolpropan (2-Hydroxymethyl-2-ethyl-propandiol-1,3) wird technisch durch Aldolkondensation und Reduktion von n-Butyraldehyd mit Formaldehyd in Ausbeuten von ca. 90 % erhalten. Als Katalysatoren für die Aldolkondensation werden üblicherweise Kalkmilch, Alkali oder basische Ionenaustauscher eingesetzt. Überschüssiger Formaldehyd und Basen, wie z.B. Natronlauge, reduzieren das gebildete Aldol zum Trimethylolpropan. Das Reaktionsgemisch wird durch Extraktion mit Lösungsmitteln, wie Amylalkohol, Cyclohexanol oder Essigester, und anschließender Destillation des Trimethylolpropans aufgearbeitet. In diesem Zusammenhang verweisen wir auf Ullmann, Verlag Chemie, Weinheim 1976 (4) 7, Seite 231 sowie auf die dort zitierte Literatur. Der nach der Destillation des Trimethylolpropans verbleibende Rückstand besitzt die oben angegebene Viskosität und enthält üblicherweise weniger als 10 Gew.-%, bevorzugt weniger als 5 Gew.-% an Trimethylolpropan.

Die zur Herstellung der erfindungsgemäßen Kautschukmischungen einzusetzenden Kautschuke umfassen Naturkautschuk und Synthesekautschuke. Bevorzugte Synthesekautschuke sind beispielsweise bei W. Hofmann, Kautschuktechnologie, Genter Verlag, Stuttgart 1980, beschrieben. Sie umfassen u.a.
- BR -: Polybutadien
- ABR -: Butadien/Acrylsäure-C₁-C₄-alkylester-Copolymere
- CR -: Polychloropren
- IR -: Polyisopren
- SBR -: Styrol/Butadien-Copolymerisate mit Styrolgehalten von 1 - 60, vorzugsweise 20- 50 Gew.-%
- IIR -: Isobutylen/Isopren-Copolymerisate
- NBR -: Butadien/Acrylnitril-Copolymere mit Acrylnitrilgehalten von 5 - 60, vorzugsweise 10-40 Gew.-%
- HNBR-: teilhydrierter oder vollständig hydrierter NBR-Kautschuk
- EPDM-: Ethylen/Propylen/Dien-Copolymerisate
sowie Mischungen dieser Kautschuke.

Für die Herstellung von Kraftfahrzeugreifen sind insbesondere Mischungen von Naturkautschuk, Emulsions-SBR- sowie Lösungs-SBR- und Polybutadien Kautschuk von Bedeutung. Von besonderem Interesse ist der Einsatz von Lösungs-SBR-Kautschuken mit einem Vinylgehalt von 20-60 Gew.-% sowie von Polybutadienkautschuken mit einem hohen 1,4-cis-Gehalt (> 90 %), der mit Katalysatoren auf Basis von Nickel, Kobalt, Titan und/oder Neodym hergestellt wurde, sowie Polybutadienkautschuk mit einem Vinylgehalt von bis zu 75 % sowie die Mischungen der genannten Lösungs-SBR und Polybutadienkautschuke für den Einsatz in den erfindungsgemäßen Kautschukmischungen.

Die erfindungsgemäßen Kautschukmischungen können 0,1 bis 300 Gew.-Teile an verschiedensten Füllstoffen, bezogen auf 100 Gew.-Teile an der Gesamtmenge an Kautschuk, enthalten. Als Füllstoffe eignen sich vor allem oxidische oder silikatische Füllstoffe, Ruße oder Kautschukgele. Bevorzugt sind oxidische oder silikatische Füllstoffe.

Besonders bevorzugt sind:
- hochdisperse Kieselsäure, hergestellt z.B. durch Fällung von Lösungen von Silikaten oder Flammenhydrolyse der Silikate, von Siliciumhalogeniden mit spezifischen Oberflächen von 5 - 1000, vorzugsweise 20 - 400 m²/g (BET-Oberfläche) und mit Primärteilchengröße von 10 - 400 nm. Die Kieselsäuren können gegebenenfalls auch als Mischoxide mit anderen Metalloxiden, wie Al-, Mg-, Ca-, Ba-, Zn-, Zr-, Ti-oxiden vorliegen.
- Synthetische Silikate, wie Aluminiumsilikat, Erdalkalisilikate, wie Magnesiumsilikat oder Calciumsilikat, mit BET-Oberflächen von 20 - 400 m²/g und Primärteilchendurchmessern von 10 - 400 nm.
- Natürliche Silikate, wie Kaolin und andere natürlich vorkommende Kieselsäuren
- Glasfasern und Glasfaserprodukte (Matten, Stränge) oder Mikroglaskugeln
- Metalloxide, wie Zinkoxid, Calciumoxid, Magnesiumoxid, Aluminiumoxid
- Metallcarbonate, wie Magnesiumcarbonat, Calciumcarbonat, Zinkcarbonat
- Metallhydroxide, wie Aluminiumhydroxid, Magnesiumhydroxid.

Die erwähnten Füllstoffe werden bevorzugt in Mengen von 5 bis 200 Gew.-Teilen, insbesondere in Mengen von 10 bis 150 Gew.-Teilen, bezogen auf 100 Gew.-Teile an eingesetzten Kautschuken, eingesetzt.

Wie erwähnt, eignen sich auch Ruße als Füllstoffe. Sie werden nach dem Flammruß, Furnace- oder Gasrußverfahren hergestellt und besitzen BET-Oberflächen von 20 bis 200 m²/g, wie z.B. SAF-, ISAF-, HAF-, FEF- oder GPF-Ruße.

Daneben können auch Kautschukgele als Füllstoffe dem erfindungsgemäßen Kautschukmischungen zugegeben werden. Solche Kautschukgele basieren auf Polybutadien-, Polychloropren-, NBR- oder SBR-Kautschuken.

In einer besonders bevorzugten Ausführungsform bestehen die erfindungsgemäßen Kautschukmischungen neben mindestens einem Kautschuk aus 0,5 - 10 Gew.-Teilen Destillationsrückstand der technischen Trimethylolpropanherstellung, 10 bis 100 Gew.-Teilen an oxidischen oder silikatischen Füllstoff und 5 bis 50 Gew.-Teilen an Ruß und/oder Kautschukgelen, jeweils bezogen auf 100 Gew.-Teile an eingesetzten Kautschuken.

Zur Herstellung von Kautschukvulkanisaten können die bekannten und dafür üblichen Kautschukhilfsprodukte den erfindungsgemäßen Kautschukmischungen zugegeben werden, insbesondere Vulkanisationsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide, Vernetzer sowie Aktivatoren. In diesem Zusammenhang verweisen wir auf I. Franta, Elastomers and Rubber Compounding Materials, Elsevier 1989.

Die Kautschukhilfsmittel werden in üblichen Mengen, die sich unter anderem nach dem Verwendungszweck richten, eingesetzt. Übliche Mengen sind z.B. Mengen von 0,1 *-* 50 Gew.-%, bezogen auf die Gesamtmenge an eingesetzten Kautschuken.

Darüber hinaus können bei der Herstellung von Kautschukvulkanisaten noch die bekannten Vemetzer wie Schwefel, Schwefelspender oder Peroxide eingesetzt werden. Außerdem können selbstverständlich noch Vulkanisationsbeschleuniger wie Mercaptobenzthiazole, Guanidine, Thiurame, Dithiocarbamate, Thioharnstoffe und/oder Thiocarbonate den erfindungsgemäßen Kautschukmischungen zugegeben werden. Die Vulkanisationsbeschleuniger und Vernetzer werden in Mengen von ca. 0,1 - 10 Gew.-%, bevorzugt 0,1 bis 5 Gew.-%, bezogen auf die Gesamtmenge an eingesetzten Kautschuken, eingesetzt.

In einer besonders bevorzugten Ausführungsform enthalten die erfindungsgemäßen Kautschukmischungen neben den erwähnten Kautschuken, den Füllstoffen, dem Destillationsrückstand der technischen Trimethylolpropanherstellung, den Kautschukhilfsmitteln und Vernetzern noch 0,2 bis 4 Gew.-Teile an Zinksalzen aliphatischer, cycloaliphatischer und/oder aromatischer C₆-C₃₆-Carbonsäuren, z.B. Zinksalze der Talgfettsäure, der Ölsäure oder Benzoesäure. Darüber hinaus werden in der besonders bevorzugten Ausführungsform noch 0,5 bis 15 Gew.-Teile, bezogen auf 100 Gew.-Teile an eingesetzten Kautschuken, schwefelhaltige Silylether als Füllstoffaktivatoren zugesetzt, insbesondere Bis-(trialkoxisilyl-alkyl)-polysulfide, wie in DE-A 2 141 159 und DE-A 2 255 577 beschrieben, oligomere und/oder polymere schwefelhaltige Silylether, wie in DE-A 4 425 311 und EP-A 670 347 beschrieben sowie Mercaptoalkyltrialkoxisilane, Mercaptopropyltriethoxisilan und/oder Thiocyanatoalkylsilylether, wie in DE-A 19.544.469 beschrieben.

Die erfindungsgemäßen Kautschukmischungen können in den üblichen Appaturen hergestellt werden, wie Mischaggregaten, insbesondere Walzen, Innenmischern und Mischextrudern.

Die Vulkanisation der erfindungsgemäßen Kautschukmischungen kann bei Temperaturen von 100 bis 200°C, bevorzugt 130 bis 180°C, gegebenenfalls bei Drücken von 10 bis 200 bar, erfolgen.

Die erfindungsgemäßen Trimethylolpropan-Destillationsrückstände enthaltenden Kautschukmischungen zeichnen sich insbesondere durch eine besonders gute Fließfähigkeit, hohe Verarbeitungssicherheit, sowie verbesserter Vulkanisationskinetik aus und liefern Vulkanisate mit höheren Spannungswerten. Sie eignen sich daher insbesondere zur kostengünstigen Herstellung von hochverstärkten, abriebbeständigen Formkörpern.

Als Formkörpern werden insbesondere genannt: Kabelmäntel, Schläuche, Treibriemen, Förderbänder, Walzenbeläge, Reifen, Schuhsohlen, Dichtungsringe und Dämpfungselemente. Ganz besonders bevorzugt ist die Verwendung der erfindungsgemäßen Kautschukmischungen für die Herstellung von rollwiderstandsarmen Reifenlaufflächen.

### Beispiele

### Beispiel 1

### Destillationsrückstand der techischen Trimethylolpropanherstellung

Viskosität: 2 Pa.sec bei 100°C. Gehalt an freiem Trimethylolpropan 3-5 Gew-%, Glührückstand bei 1000°C: 4,7 %. Elementaranalyse: Kohlenstoff: 53,2 %, Wasserstoff: 10,1 %, Sauerstoff: 32,5 %. Dichte bei 120°C: 1,203.

### Beispiel 2

### Kautschukmischungen und -vulkanisate

In einem 1,5 1 Kneter wurden bei 130-140°C Innentemperatur folgende Kautschukmischungen hergestellt und anschließend Schwefel und Beschleuniger bei ca. 50-80°C auf einer Walze zugemischt. Die angegebenen Mengen bezogen sich auf Gew.-Teile.

| | **Vergleich 2A** | **Vergleich 2B** | **Vergleich 2C** | **Beispiel 2D** |
|---|---|---|---|---|
| **L-SBR Buna VSL 5025-1 (Bayer)** | 96 | 96 | 96 | 96 |
| **BR Buna CB 24 (Bayer)** | 30 | 30 | 30 | 30 |
| **Kieselsäure Vulkasil S (Bayer AG)** | 80 | 80 | 80 | 80 |
| **Ruß Corax N 339 (Degussa)** | 6,5 | 6,5 | 6,5 | 6,5 |
| **Silan S: 69 (Degussa)** | 6,5 | 6,5 | 6,5 | 6,5 |
| **Stearinsäure** | 1 | 1 | 1 | 1 |
| **Zinkoxid RS (Bayer)** | 2,5 | 2,5 | 2,5 | 2,5 |
| **aromat. Mineralöl** | 8 | 8 | 8 | 8 |
| **Antioxidans Vulkanox 4020 (Bayer)** | 1 | 1 | 1 | 1 |
| **Antioxidans Vulkanox HS (Bayer)** | 1 | 1 | 1 | 1 |
| **Wachs Antilux 54 (Rheinchemie)** | 1,5 | 1,5 | 1,5 | 1,5 |
| **Diethylenglykol** | 0 | 4 | 0 | 0 |
| **Trimethylolpropan** | 0 | 0 | 4 | 0 |
| **Substanz gemäß Beispiel 1** | 0 | 0 | 0 | 4 |
| **Schwefel** | 1,5 | 1,5 | 1,5 | 1,5 |
| **Beschleuniger Vulcacit D (Bayer)** | 2 | 2 | 2 | 2 |
| **Beschleuniger Vulkacit CZ (Bayer)** | 1,5 | 1,5 | 1,5 | 1,5 |
| | | | | |
| **Mischungsviskositat ML 1+4 bei 100°C (ME)** | 76 | 73 | 69 | 67 |
| **Mooney Scorch bei 130°C (Minuten)** | 11 | 11 | 15 | 18 |
| | | | | |
| **Vulkanisation bei 160°C (Minuten)** | 30 | 30 | 30 | 30 |
| **Spannungswert bei 100 % Dehnung (MPa)** | 2,9 | 3,5 | 3,3 | 3,4 |
| **Spannungswert bei 300 % Dehnung (MPa)** | 12,5 | 14,6 | 13,6 | 14,1 |
| **Härte bei 23°C (Shore A)** | 71 | 74 | 76 | 75 |
| **Zugfestigkeit (MPa)** | 20,1 | 17,8 | 18,8 | 18 |
| **Rückprallelastizität bei 23°C (%)** | 28 | 27 | 28 | 28 |
| **Rückprallelastizität bei 70°C (%)** | 51 | 48 | 53 | 52 |
| **Abrieb DIN 53 516 (ccm)** | 78 | 80 | 76 | 78 |

Die vorliegenden Ergebnisse zeigen die hevorragende Wirksamkeit des Destillationsrückstandes der technischen Trimethylolpropanherstellung in Bezug auf Senkung der Mischungsviskosität (gemessen als ML 1+4) und Verlängerung der Verarbeitbarkeit (gemessen als Mooney Scorch-Zeit) der Kautschukmischung bei gleichzeitig hohem mechanischen Eigenschaftsniveau der Vulkanisate. Gleichzeitig werden die Rohstoffkosten deutlich reduziert.

## Patentansprüche

1. Kautschukmischungen bestehend aus mindestens einem Kautschuk und 0,1 bis 15 Gew.-Teilen, bezogen auf 100 Gew.-Teile an eingesetzten Kautschuken, eines Destillationsrückstandes aus der technischen Trimethylolpropanherstellung, gemäß der Trimethylolpropan durch Aldolkondensation und Reduktion von n-Butylaldehyd mit Formaldehyd in Gegenwart von Katalysatoren hergestellt wird, wobei der Destillationsrückstand eine Viskosität von 0,5 bis 20 Pa.sec bei 100 °C aufweist.

2. Kautschukmischungen nach Anspruch 1, **dadurch gekennzeichnet, daß** sie 0,1 bis 300 Gew.-Teile an anorganischen oder organischen Füllstoffen, bezogen auf 100 Gew.-Teile an eingesetzten Kautschuken, enthalten.

3. Kautschukmischungen nach Anspruch 1, **dadurch gekennzeichnet, daß** als Füllstoffe oxidische oder silikatische Füllstoffe, Ruße und/oder Kautschukgele eingesetzt werden.

4. Kautschukmischungen nach Anspruch 1, **dadurch gekennzeichnet, daß** als Füllstoffe mindestens eine gefällte Kieselsäure oder gefällte Silikate mit einer spezifischen Oberfläche von 20 bis 400 m²/g eingesetzt werden.

5. Kautschukmischungen nach Anspruch 1, **dadurch gekennzeichnet, daß** sie neben mindestens einem Kautschuk 0,5 bis 10 Gew.-Teilen an Destillationsrückstand der technischen Trimethylolpropanherstellung, 10 bis 100 Gew.-Teilen an oxidischem oder silikatischem Füllstoff und 2 bis 50 Gew.-Teilen an Ruß oder Kautschukgel, jeweils bezogen auf 100 Gew.-Teile an eingesetzten Kautschuken, enthalten.

6. Verwendung der Kautschukmischungen nach Anspruch 1 zur Herstellung von Vulkanisaten.

7. Verwendung der Kautschukmischungen nach Anspruch 1 zur Herstellung von Reifen, insbesondere Reifenlaufflächen.

## Claims

1. Rubber compounds consisting of at least one rubber and 0.1 to 15 parts by weight, based on 100 parts by weight of rubbers used, of a distillation residue from industrial trimethylolpropane production, according to which trimethylolpropane is produced by aldol condensation and reduction of n-butyl aldehyde with formaldehyde in the presence of catalysts, the distillation residue having a viscosity of 0.5 to 20 Pa.sec at 100°C.

2. Rubber compounds according to claim 1, **characterised in that** they contain 0.1 to 300 parts by weight of inorganic or organic fillers, based on 100 parts by weight of rubbers used.

3. Rubber compounds according to claim 1, **characterised in that** oxide or silicate fillers, carbon blacks and/or rubber gels are used as fillers.

4. Rubber compounds according to claim 1, **characterised in that** at least one precipitated silica or precipitated silicates with a specific surface of 20 to 400 m²/g are used as fillers.

5. Rubber compounds according to claim 1, **characterised in that** they contain 0.5 to 10 parts by weight of distillation residue from industrial trimethylolpropane production, 10 to 100 parts by weight of oxide or silicate filler and 2 to 50 parts by weight of carbon black or rubber gel, based on 100 parts by weight of rubbers used in each case, in addition to at least one rubber.

6. Use of the rubber compounds according to claim 1 for the production of vulcanisates.

7. Use of the rubber compounds according to claim 1 for the production of tyres, especially tyre treads.

## Revendications

1. Mélanges de caoutchouc consistant en au moins un caoutchouc et 0,1 à 15 parties en poids, sur base de 100 parties en poids du caoutchouc mis en oeuvre, d'un résidu de distillation de la préparation industrielle du triméthylolpropane, selon laquelle le triméthylolpropane est préparé par condensation d'aldol et réduction du n-butylaldéhyde avec du formaldéhyde en présence de catalyseurs, où le résidu de distillation présente une viscosité allant de 0,5 à 20 Pa.sec à 100°C.

2. Mélanges de caoutchouc suivant la revendication 1, **caractérisés en ce qu'**ils contiennent 0,1 à 300 parties en poids de charges inorganiques ou organiques, sur base de 100 parties en poids du caoutchouc mis en oeuvre.

3. Mélanges de caoutchouc suivant la revendication 1, **caractérisés en ce que** l'on met en oeuvre comme charge, des charges oxydes ou silicatiques, la suie et/ou des gels de caoutchouc.

4. Mélanges de caoutchouc suivant la revendication 1, **caractérisés** en ce l'on met en oeuvre comme charge, au moins un acide silicique précipité ou du silicate précipité avec une surface spécifique allant de 20 à 400 m²/g.

5. Mélanges de caoutchouc suivant la revendication 1, **caractérisés en ce qu'**ils contiennent en plus d'au moins un caoutchouc, 0,5 à 10 parties en poids de résidu de distillation de la préparation industrielle du triméthylolpropane, 10 à 100 parties en poids de charge oxydes ou silicatiques et 2 à 50 parties en poids de suie ou de gel de caoutchouc, chaque fois sur base de 100 parties de caoutchouc mis en oeuvre.

6. Utilisation des mélanges de caoutchouc suivant la revendication 1, pour la préparation de vulcanisats.

7. Utilisation des mélanges de caoutchouc suivant la revendication 1, pour la préparation de pneumatiques, en particulier de bandes de roulement.
